# EUROPEAN PATENT APPLICATION

(11) **EP 4 400 256 A1**
(43) Date of publication of application: **17.07.2024**
(21) Application number: 22866684.8
(22) Date of filing: 08.09.2022
(51) Int. Cl.: B23P 19/00, B65G 43/08, B65G 47/90, B65G 57/00, B65G 65/23

(54) **LOCK PIN ASSEMBLY/DISASSEMBLY SYSTEM OF CONTAINER AND WORKING METHOD THEREFOR**

(30) Priority: 09.09.2021 CN 202111057346
(71) Applicant: Shanghai Zhenhua Heavy Industries Co., Ltd., Shanghai 200125 (CN); PSA International Pte Ltd, Singapore 117352 (SG)
(72) Inventor: ZHAO, Yongxin, Shanghai 200125 (CN); ZHANG, Minghai, Shanghai 200125 (CN); HU, Jun, Shanghai 200125 (CN); CHEN, Jinqian, Shanghai 200125 (CN); CAO, Le, Shanghai 200125 (CN); FOO, Alvin, Singapore 117352 (SG); TAN, Tiam Her, Singapore 117352 (SG); TEO, Calvin, Singapore 117352 (SG); CHUA, Leng Wah, Singapore 117352 (SG); TAN, Weiming, Singapore 117352 (SG)
(74) Representative: Barker Brettell LLP
(86) International application number: PCT/CN2022/117721
(87) International publication number: WO 2023/036221

(57) **Abstract**

The present invention provides a container fitting removing and installing system for a container and an operation method thereof. The container fitting removing and installing system for a container comprises a control unit and an identifying unit connected to the control unit. The identifying unit is configured to identify the type and position information of the container and the types and position information of the container fittings and transmit an identification result to the control unit. The container fitting removing and installing system for a container further comprises a removing and installing unit connected to the control unit. The control unit controls the removing and installing unit to remove the container fittings from the container or to install the container fittings onto the container according to the received identification result. With this system, unmanned and fully automated removal and installation of the container fittings can be achieved, thereby improving the efficiency of the terminal operation.

## Description

### Technical field

The present invention relates to the technical field of a dedicated container device, in particular to a container fitting removing and installing system for a container and an operation method thereof.

### Background

Container transportation is currently the main mode of transportation between terminals. In order to ensure reliability and stability during transportation, a plurality of containers need to be fixed through container fittings of the container during container loading process. When the container arrives at a destination terminal, the container fittings are removed from the container so as to achieve the unloading of the container. Currently, the container fittings stored in storage gearbins are usually installed on the container by manual labor or the removed container fittings are placed into the storage gearbins by manual labor. Therefore, it requires a lot of labor and time. Moreover, the loading and unloading environment is harsh and there are potential dangers to the health and life of the workers.

Hence, there is a need for an unmanned and automated container fitting removal and installation system, thereby achieving unmanned terminal operations to improve efficiency of operation and protect personal safety.

### Summary

The purpose of the present invention is to address a technical problem that still requires manual labor to carry out the removal and installation of the container fittings and low operational efficiency. The present invention provides a container fitting removing and installing system for a container, to achieve unmanned and automated removal and installation of the container fittings, thereby improving efficiency and avoiding personal safety incidents.

To solve the above technical problem, the embodiment of the present invention discloses a container fitting removing and installing system for a container, comprising: a control unit; an identifying unit connected to the control unit and configured to identify the type and position information of the container and the types and position information of the container fittings and transmit an identification result to the control unit; and a removing and installing unit connected to the control unit which controls the removing and installing unit to remove the container fittings from the container or to install the container fittings onto the container according to the received identification result.

By adopting the above technical solution, the unmanned and automated removal and installation of the container fittings of the container can be achieved, thereby improving the efficiency of the terminal operation.

According to another specific embodiment of the present invention, the container fitting removing and installing system for a container further comprises a tilting mechanism and a tray configured to carry the container fittings, the tilting mechanism being configured to drive the tray to tilt to separate the container fittings from the tray; wherein
the tray comprises:
a tray rack provided with a plurality of installing holes thereon; and
a plurality of carrying portions respectively provided in the installing holes,
wherein each of the carrying portions comprises two oppositely provided cover plates, and top ends of the opposite sides of the two cover plates are respectively hinged to top ends of the opposite side walls of the installing holes; when the cover plates are in a closed state, an accommodation space for carrying the container fittings is formed between the opposite sides of the two cover plates; a bottom end of a side wall of the installing hole has a protrusion extending towards an axis of the installing hole, and the protrusion is configured to restrict the cover plate from opening in one direction; when the tray rack is tilted by 180°, the cover plate is automatically opened to make the container fittings automatically fall into gearbins.

According to another specific embodiment of the present invention, the tilting mechanism comprises a tilting motor and a supporting frame connected to an output end of the tilting motor, and the supporting frame is configured to carry the tray, and the turning motor is connected to the control unit.

According to another specific embodiment of the present invention, the supporting frame comprises a first supporting frame and a second supporting frame provided at intervals on both sides of the tilting motor; and the tilting mechanism further comprises:
a first gear sleeved on the output end of the tilting motor which drives the first gear to rotate synchronously;
a second gear meshed to the first gear;
a first sprocket connected to the second gear through a first chain;
a first rotating shaft provided in the first supporting frame, the first rotating shaft being connected to the first sprocket to drive the first supporting frame to tilt under the driving of the first sprocket;
a second sprocket connected to the second gear through a second chain; and
a second rotating shaft provided in the second supporting frame, the second rotating shaft being connected to the second sprocket to drive the second supporting frame to tilt under the driving of the second sprocket.

According to another specific embodiment of the present invention, container fitting removing and installing system for a container further comprises a slewing mechanism which comprises:
a slewing motor connected to the control unit;
a third gear connected to an output end of the slewing motor;
a fourth gear respectively connected to the third gear and the tilting mechanism; the tilting mechanism being provided above the fourth gear;
the slewing motor is configured to drive the third gear and the fourth gear to operate under the control of the control unit, so as to drive the tilting mechanism to rotate in a horizontal plane.

According to another specific embodiment of the present invention, container fitting removing and installing system for a container further comprises: a lifting and lowering mechanism connected to the slewing mechanism and configured to drive the slewing mechanism and the tilting mechanism which is connected to the slewing mechanism to move in a vertical direction.

According to another specific embodiment of the present invention, container fitting removing and installing system for a container further comprises: a conveying unit configured to convey the tray between the removing and installing unit and the tilting mechanism.

According to another specific embodiment of the present invention, the conveying unit comprises a plurality of conveying mechanisms and jacking mechanisms, each jacking mechanism is provided between two adjacent conveying mechanisms and provided close to the removing and installing unit, and the jacking mechanism comprises:
an outer frame fixed with a fifth sprocket at an upper end thereof;
a jacking motor provided at the bottom of the outer frame, an output end of the jacking motor being connected to a sixth sprocket, the fifth sprocket and the sixth sprocket being connected by a third chain; and
a support rack configured to place the tray, the support rack being connected to the third chain and moving in a vertical direction by operation of the third chain when the jacking motor drives the sixth sprocket to drive the third chain to operate.

According to another specific embodiment of the present invention, an upper end of the outer frame is further provided with a guide rod extending in a vertical direction, the guide rod passes through the support frame, and the support frame is capable of moving up and down along the guide rod.

According to another specific embodiment of the present invention, the container fitting removing and installing system for a container further comprises a palletizing unit which comprises:
a palletizing rack configured to stack the tray; and
a palletizing robot connected to the control unit and configured to achieve the transfer of the tray between the conveying unit and the palletizing rack, the palletizing robot comprising a palletizing robotic arm connected to the control unit and a palletizing spreader installed at one end of the palletizing robotic arm.

According to another specific embodiment of the present invention, wherein the tray rack is provided with a plurality of lifting points and provided with a mortise and a tenon matched with each other, wherein the lifting points and the mortise are provided on an upper surface of the tray rack, and the tenon is provided on a lower surface of the tray rack.

According to another specific embodiment of the present invention, the identifying unit comprises:
a container identifying unit connected to the control unit and configured to identify the type and position information of the container and send an identification result to the control unit; and
a container fitting identifying unit connected to the control unit, the control unit being further configured to control the container fitting identifying unit to move to a suitable position according to the identification result of the container identifying unit, so that the container fitting identifying unit obtains the types and position information of the container fittings; the container fitting identifying unit being configured to transmit the identified types and position information of the container fittings to the control unit.

According to another specific embodiment of the present invention, the container identifying unit comprises five sensors arranged on a pedestal bracket at intervals along a first direction, and the pedestal bracket is configured to carry the container; and wherein each sensor is connected to the control unit, and when the sensor detects an object, the sensor sends a signal to the control unit, and the control unit determines the type and position information of the container according to the signal output sent by each sensor.

According to another specific embodiment of the present invention, the container fitting identifying unit stores template comparing images of multiple types of container fittings, and a method that the container fitting identifying unit obtains the types and position information of the container fittings comprises steps of
laser scanning the container fittings to obtain images of preset surfaces of the container fittings;
analyzing each point in the images to obtain depth information corresponding to each point;
respectively comparing the depth information of each point on the obtained images with depth information of each corresponding point in each template comparing image to determine the types of the container fittings; and
comparing the template comparing images corresponding to the container fittings with the obtained images of the container fittings to obtain the position information of the container fittings.

According to another specific embodiment of the present invention, a sun visor is provided near the container fitting identifying unit.

According to another specific embodiment of the present invention, the removing and installing unit comprises a plurality of robotic arms and a floating device connected to the robotic arm, the floating device is installed with a gripper for gripping the container fittings, each robotic arm is equipped with an automatic quick gripper replacement device and a gripper cabinet configured to accommodate different types of grippers is provided near each robotic arm.

An embodiment of the present invention further provides an operation method for the container fitting removing and installing system, comprising steps of:
the control unit receiving an operation command;
the control unit controlling the palletizing unit to operate according to the operation command to make the palletizing unit place a tray full of container fittings either at a designated area or at the tilting mechanism;
when the palletizing unit transports the tray full of the container fittings to the tilting mechanism, the control unit controlling the tilting mechanism to tilt the tray with container fittings by 180°, to make the container fittings automatically fall into the gearbins under the action of gravity;
the control unit controlling the palletizing unit to place the transported empty tray at a designated position;
repeating the above two steps until removing of the container fittings is completed.

According to another specific embodiment of the present invention, the operation command comprises the quantity of container fittings to be removed and the quantity of container fittings to be installed; the control unit controlling the palletizing unit to operate according to the operation command to make the palletizing unit place a tray full of container fittings either at a designated area or at the tilting mechanism comprises steps of:
the control unit comparing the quantity of container fittings to be removed with the quantity of container fittings to be installed based on the operation command, and if the quantity of container fittings to be removed is equal to the quantity of container fittings to be installed, the control unit controlling the palletizing unit to place the tray in the designated area;
if the quantity of container fittings to be removed is more than the quantity of container fittings to be installed, the control unit controlling the palletizing unit to place the tray full of the same quantity of container fittings as the quantity of container fittings to be installed into the designated area, and to place the remaining trays into the tilting mechanism; and
if the quantity of container fittings to be removed is less than the quantity of container fittings to be installed, the control unit controlling the palletizing unit to place the trays into the designated area, and manually place on empty trays a quantity of container fittings equal to the difference between the quantity of container fittings to be installed and the quantity of container fittings to be removed.

### Brief description of drawings

FIG. 1 is a structural block diagram of a container fitting removing and installing system for a container according to a specific embodiment of the present invention;
FIG. 2 is a schematic diagram of the installation positions of sensors in the container identifying unit according to a specific embodiment of the present invention;
FIG. 3 is a schematic diagram of an installation position of a container fitting identifying unit according to a specific embodiment of the present invention;
FIG. 4 is a schematic diagram of an installation position of a sun visor board according to a specific embodiment of the present invention;
FIG. 5 is a partial enlarged diagram of part C in FIG. 4;
FIG. 6 is a partial structural schematic diagram of a container fitting removing and installing system for a container according to a specific embodiment of the present invention;
FIG. 7 is a structural schematic diagram of a tray according to a specific embodiment of the present invention;
FIG. 8 is a side view of a tray according to a specific embodiment of the present invention;
FIG. 9 is a schematic diagram of a cutaway portion in a B direction in FIG. 7 in four different states;
FIG. 10 is a schematic diagram of stacking empty trays according to a specific embodiment of the present invention;
FIG. 11 is a schematic diagram of stacking trays full of container fittings according to a specific embodiment of the present invention;
FIG. 12 is a structural schematic diagram of a conveying unit according to a specific embodiment of the present invention;
FIG. 13 is a first structural schematic diagram of a jacking mechanism according to a specific embodiment of the present invention;
FIG. 14 is a second structural schematic diagram of a jacking mechanism according to a specific embodiment of the present invention;
FIG. 15 is a third structural schematic diagram of a jacking mechanism according to a specific embodiment of the present invention;
FIG. 16 is a schematic diagram of a position of a removing and installing workstation of a container fitting removing and installing system for a container according to a specific embodiment of the present invention;
FIG. 17 is a schematic diagram of a jacking mechanism in four different states according to a specific embodiment of the present invention;
FIG. 18 is an enlarged diagram of a dotted circle part in FIG. 6;
FIG. 19 is a partial structural schematic diagram of a tilting mechanism according to a specific embodiment of the present invention;
FIG. 20 is a schematic diagram of a tilting mechanism in two different states according to a specific embodiment of the present invention;
FIG. 21 is a structural schematic diagram of a cam mechanism in a tilting mechanism according to a specific embodiment of the present invention;
FIG. 22 is a schematic diagram of a cam curve after being expanded along its outer diameter according to a specific embodiment of the present invention;
FIG. 23 is a first structural schematic diagram of a loading and unloading unit according to a specific embodiment of the present invention;
FIG. 24 is a second structural schematic diagram of a loading and unloading unit according to a specific embodiment of the present invention;
FIG. 25 is a cutaway diagram in an A direction in FIG. 4;
FIG. 26 is a schematic diagram of a cutaway portion in a B direction in FIG. 4 in two states of not being pressed and being pressed;
FIG. 27 is a first schematic diagram of a process of working with the container fitting removing and installing system for a container according to a specific embodiment of the present invention;
FIG. 28 is a second schematic diagram of a process of working with the container fitting removing and installing system for a container according to a specific embodiment of the present invention; and
FIG. 29 is a schematic diagram of a container being transported away by a truck after the container fittings of the container have been removed.

### Detailed description of embodiments

The following specific examples illustrate embodiments of the present invention, and the person skilled in the art can easily understand other advantages and effects of the present invention from the contents disclosed in the specification. Although the description of the present invention will be introduced in combination with the preferred example, this does not mean that the features of the present invention are limited to this example. On the contrary, the purpose of introducing the invention with reference to the embodiments is to cover other possible options or modifications that may be extended based on the claims of the present invention. In order to provide an in-depth understanding of the present invention, the following description contains many specific details. The present invention can also be implemented without using these details. In addition, in order to avoid confusing or obscuring the focus of the present invention, some of the specific details will be omitted in the description. It should be noted that the examples and the features in the examples of the present invention can be combined with each another without conflict.

It should be noted that similar reference numerals and letters indicate similar items in the following drawings in this description. Therefore, once a certain item is defined in a particular drawing, there is no need to further define and explain on the item again in the subsequent drawings.

In the description of the example, it should be noted that the orientation or position relationships indicated by the terms "upper", "lower", "inner", "bottom", etc. are based on the orientation or position relationships shown in the drawings, or the orientation or position relationships usually placed when the product of the invention is used, and are only for the convenience of describing the present invention and simplifying the description, rather than indicating or implying that the device or element referred to must have a specific orientation or be constructed and operated in a specific orientation. Therefore, it cannot be interpreted as a limitation to the present invention.

The terms "first", "second", etc. are only used for distinguishing description, and cannot be interpreted as indicating or implying relative importance.

In the description of the example, it should further be noted that the terms "provided", "connected" and "connection" should be interpreted as a broad understanding unless otherwise clearly specified and limited, for example, the connection may be a fixed connection or a detachable connection or an integral connection; or may be a mechanical connection or an electrical connection; or may be a direct connection or an indirect connection by using an intermediate medium, and may be an internal communication between two elements. For the person of ordinary skill in the art, the specific meanings of the above terms in the example can be understood in specific situations.

In order to make the objects, technical solutions and advantages of the present invention clearer, the embodiments of the present invention are described in further details below with reference to the accompanying drawings.

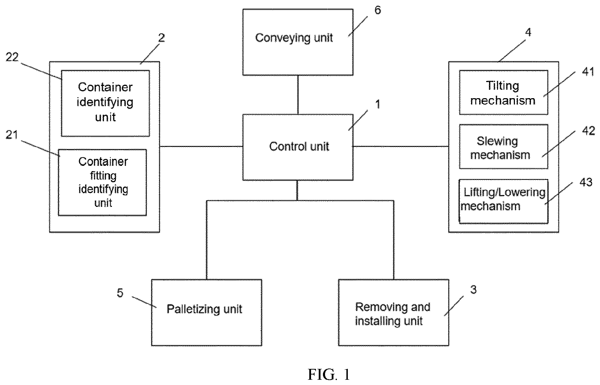

As shown in FIG. 1, a specific embodiment of the present invention provides a container fitting removing and installing system for a container, comprising: a control unit 1, an identifying unit 2, and a removing and installing unit 3, wherein
the identifying unit 2 is connected to the control unit 1 for identifying the type and position information of the container and the types and position information of the container fittings and transmitting an identification result (i.e., the types and position information of the container and of the container fittings) to the control unit 1;
the removing and installing unit 3 is connected to the control unit 1, and the control unit 1 controls the removing and installing unit 3 to remove the container fittings from the container or to install the container fittings onto the container according to the received identification result.

A communication connection is established between the control unit 1, the identifying unit 2 and the removing and installing unit 3, so that the control unit 1 can receive the type and position information of the container and the type and position information of the container fittings identified by the identifying unit 2, and control the removing and installing unit 3 to remove the container fittings on the container or to install the container fittings onto the container according to the above information, so as to achieve automatic removal and installation of the container fittings of the container and improve the working efficiency.

In specific implementation, the container fitting removing and installing system for the container can further comprises a bracket used to rest the container and fix all means in the system.

Exemplarily, the identifying unit 2 comprises a container identifying unit 22 and a container fitting identifying unit 21.

The container identifying unit 22 is connected to the control unit 1 for identifying the type and position information of the container and send an identification result to the control unit 1. The container fitting identifying unit 21 is connected to the control unit 1, and the control unit 1 is further used to control the container fitting identifying unit 21 to move to a suitable location according to the identification result of the container identifying unit 22, so that the container fitting identifying unit 21 can obtain the types and position information of the container fittings. The container fitting identifying unit 21 is used to transmit the identified types and position information of the container fittings to the control unit.

Exemplarily, the container identifying unit 22 comprises five sensors arranged on a pedestal bracket at intervals along the first direction, and the pedestal bracket is used to carry the container; wherein, each sensor is connected to the control unit, and when the sensor detects an object, the sensor sends a signal to the control unit 1, and the control unit 1 determines the type and position information of the container according to the signals output by the sensors.

In specific implementation, the container identifying unit 22 is responsible for identifying a mode of the target container (the container mode comprises: single 20-foot, single 40-foot, single 45-foot, and double 20-foot) and the position of the container. The container identifying unit 22 comprises five sensors each occupying a separate pedestal, and each sensor is installed in the pedestal, and pipeline wiring is routed inside the pedestal to achieve overall transportation and stable working conditions. As mentioned above, the container can be divided into four types: single 20-foot, single 40-foot, single 45-foot and double 20-foot containers. Each type of container can be placed on the pedestal bracket.

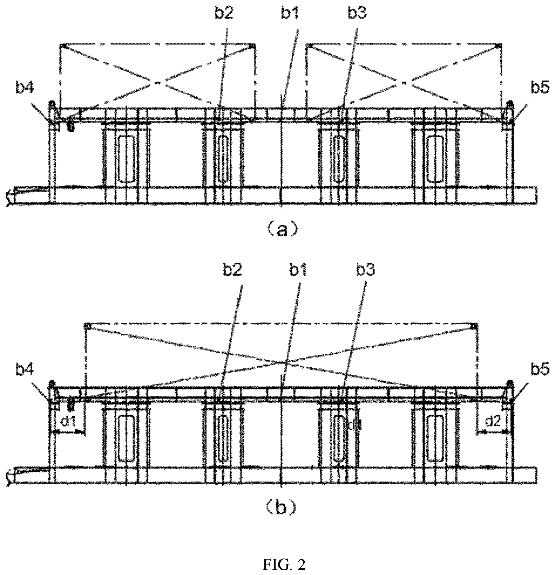

Specifically, as shown in FIG. 2, the five sensors comprise three photoelectric sensors and two laser limit sensors. Installation positions of the sensors are specifically as follows: a first photoelectric sensor b1 is installed at a center location on one of the two long sides of the pedestal, this sensor can make a signal change when a reflective object appears in the front sector range, there are many types of photoelectric sensors in the market, and the type of the photoelectric sensor can be selected according to the actual situation. Photoelectric sensors (that is, a second photoelectric sensor b2 and a third photoelectric sensor b3) are respectively installed on both sides of the sensor b1. When the second photoelectric sensor b2 and the third photoelectric sensor b3 sense that there is an object in front of the sensors at the same time, it can be considered that a container is placed in front of the sensors, and the control unit 1 starts the determining work. Since there will be a gap between two containers (as shown in the dotted-line blocks in FIG. 2(a)) of a double 20-foot container (as shown in FIG. 2a), it can be determined that the container to be identified is a double 20-foot container type or is one of the other three container types based on whether the sensor at the center location has any signal. When the container to be identified is one of the other three container types, the exact type can be determined by laser distance sensors located at both ends of the pedestal. That is, the laser limit sensors (a first laser limit sensor b4 and a second laser limit sensor b5) used for laser ranging and limiting are respectively provided at both ends of the pedestal, and distances d1 and d2 (as shown in FIG. 2b) between the sensors and the fittings to container corner castings can be determined according to the two limit sensors. Specifically, as a single 20-foot container is about 6 meters long, a single 40-foot container is about 12 meters long, and a single 45-foot container is about 14 meters long, in this case, if the distance d between the sensor and the fitting to container corner casting is less than 1 meter, it is determined as a single 45-foot container; if the distance d is between 1 meter and 2 meters, it is then determined as a single 40-foot container; and if the distance d is between 3.5 meters and 5.5 meters, it is determined as a single 20-foot container. Furthermore, if the distance value falls out of these range, it can be treated as a fault condition.

The five sensors are all installed in the pedestal bracket by hollowing out holes inside the pedestal bracket, and the area directly opposite the hole is detected through the holes. The pedestal bracket protects the sensor from light and rain, which can also reduce the measurement error of the sensor and protect the sensor. At the same time, a left-right offset of the container placement location can be calculated based on the difference between the values given by the sensors capable of laser ranging at both ends to obtain the spatial position of the container. Then, the control unit 1 feeds back the position information of the container to the container fitting identifying unit 21, so that the container fitting identifying unit 21 can perform a visual scan of the best position to complete the positioning of the fittings to container corner castings and container fittings and the identifying of the types of the locking nuts, so as to ensure the realization of the automatic removal and installation of the container fittings.

Exemplarily, the container fitting identifying unit 21 stores template comparing images of multiple types of container fittings, and the method that the container fitting identifying unit 21 obtains the type and position information of the container fitting comprises:
laser scanning the container fittings to obtain images of preset surfaces of the container fittings;
analyzing each point in the images to obtain depth information corresponding to each point;
respectively comparing the depth information of each point on the obtained images with depth information of each corresponding point in each template comparing image to determine the types of the container fittings; and
comparing the template comparing images corresponding to the container fittings with the obtained images of the container fittings to obtain the position information of the container fittings.

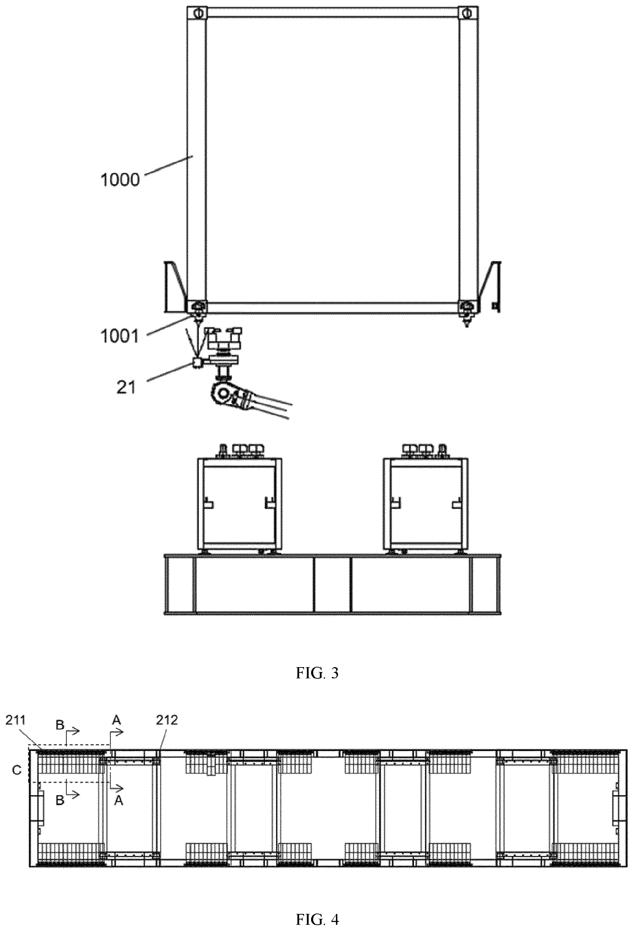

That is, in specific implementation, as shown in FIG. 3, the container fitting identifying unit 21 can be a vision identifying system, and the vision identifying system can obtain an image of the vertical upward bottom surface of the container fitting 1001 under the fitting to container corner casting of the container 1000 by using laser scanning. Generally speaking, there are 1000* 1000 points on the image that are evenly distributed in the captured image, and each point has depth information. For different container fitting types or different locations, depth information of each point in the image is different. Therefore, for different types of the container fittings, e.g., ten types, ten templates can be provided in the vision identifying system in advance. The information of the next scan is compared, and the depth of each corresponding point in the image is compared with that in the template. The closest template is selected from the ten templates, that is, the type of container fitting. Then, points in the template image can be further compared with the points in the captured image to obtain translational changes, so as to calculate the translation amount, and to obtain the position of the container fitting.

Exemplarily, a sun visor 211 is provided near the container fitting identifying unit 21 to reduce interference of sunlight on the container fitting identifying unit 21.

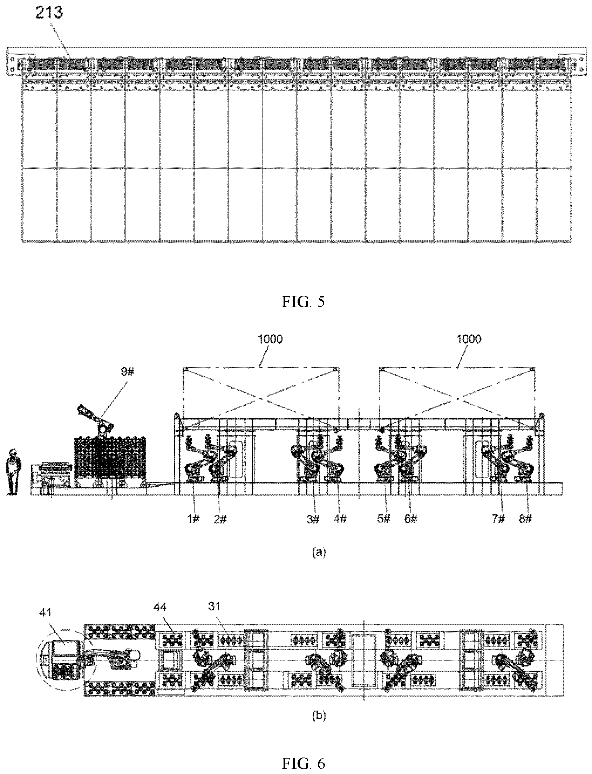

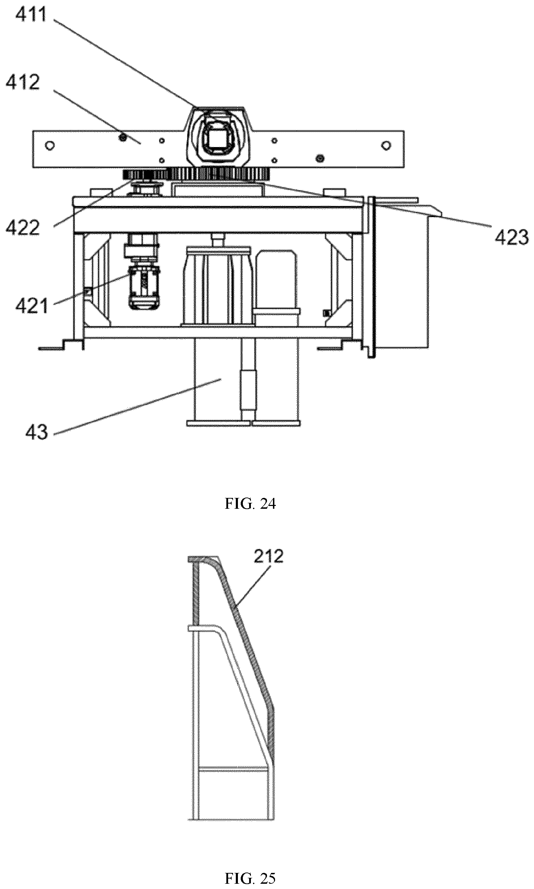

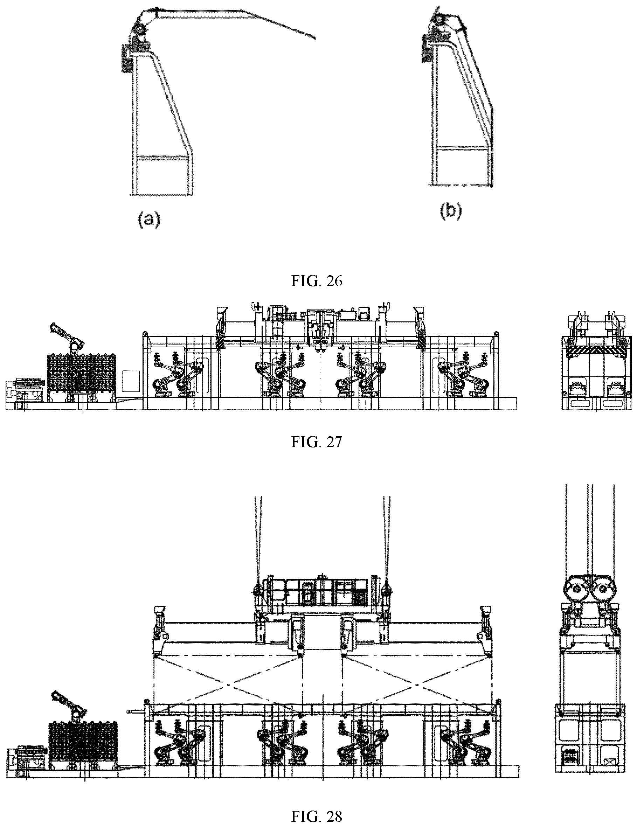

Specifically, as shown in FIGS. 4 and 25, a special sun visor 211 can be installed at workstations of the eight fittings to container corner castings where the container fittings are removed and installed, to reduce interference of sunlight on the vision identifying system. The sun visor 211 can fully provide an outdoor shading effect and establish an ideal environment to improve a success rate of the vision identifying system. Further, the sun visor 211 can be provided into 12 large pieces as required, and each large piece is divided into several small pieces with a width of 100 mm. A sun visor protecting board 212 can further be provided near each large piece sun visor to prevent the sun visor protecting board 211 from being damaged when the container is placed. As shown in FIG. 5, the sun visor 211 can be a spring-type sun visor, that is, each small piece sun visor is equipped with a spring 213. When the container lands, the small piece sun visor is pressed down due to the gravity, and the sun visor that has not been pressed down by the container is still kept in a horizontal state, and provides a shading effect. When the container is lifted again, the sun visor rebounds to the horizontal state under the action of the spring 213. FIG. 26(a) is a state diagram when the sun visor is not pressed down by the container, and FIG. 26(b) is a state diagram when the sun visor is pressed down by the container.

Exemplarily, the removing and installing unit 3 comprises a plurality of robotic arms and a floating device connected to the robotic arm. A gripper for gripping the container fittings is installed on the floating device. A gripper cabinet 31 is provided near each robotic arm. The gripper cabinet 31 is used to accommodate various types of grippers.

Specifically, the robotic arm may be a removing and installing robot. FIG. 6(b) is a plan view of FIG. 6(a). Taking FIG. 6 as an example, the removing and installing unit 3 is equipped with a total of eight removing and installing robots, namely 1#~8# robots. Each robot is provided with a floating device, a gripper is installed on the floating device, and the robot can control the location of the gripper and the matching between the position of the gripper and the container fittings of the container. The floating device can be used to compensate for positional errors, and the gripper is used to perform the removing and installing of the container fittings of the container. At the same time, the robot is equipped with an automatic quick gripper replacement device, and each robot is equipped with a closed gripper cabinet 31 which can be automatically opened and allow automatic gripper replacement. In the process of installing the container fittings, the 1#~8# removing and installing robots grab the container fittings from the tray 44 and installs the container fittings onto the fittings to container corner castings after selecting the matching grippers. In the process of removing the container fittings, the 1#~8# removing and installing robots remove the container fittings from the fittings to container corner castings and places the removed container fittings onto the empty tray 44 of a transferring line (that is, a conveying unit hereinafter) after selecting the matching grippers.

Specifically, when the container is single 20-foot, the removing and installing unit 3 can automatically remove and install the container fittings in three different modes that are respectively as follows: one robot corresponds to one locking nut at the left side position of a platform, 1#, 2#, 3# and 4# removing and installing robots act; one robot corresponds to one locking nut at the right side position of the platform, 5#, 6#, 7# and 8# removing and installing robots act; one robot corresponds to two locking nuts at the center position of the platform, 3# and 6# removing and installing robots act. When the container is single 40-foot, the 1#, 2#, 7# and 8# removing and installing robots act; when the container is single 45-foot, the 1#, 2#, 7# and 8# removing and installing robots act; and when the container is double 20-foot, all the 1#, 2#, 3#, 4#, 5#, 6#, 7# and 8# removing and installing robots act.

In addition, the removing and installing unit 3 is further configured with a functional degradation mode, that is, the automatic removing and installing function described above can be fully achieved by using 4 robots: 1# (or 2#), 3# (or 4#), 5# (or 6#) and 7# (or 8#). Specifically, when the container is single 20-foot, two different modes can be used to automatically remove and install the container fittings, and the two different modes are respectively as follows: one robot corresponds to two locking nuts at the left side position of the platform, the 1# (or 2#) and 3# (or 4#) removing and installing robots act; and one robot corresponds to two locking nuts at the right side position of the platform, the 5# (or 6#) and 7# (or 8#) removing and installing robots act. When the container is single 40-foot, the 1# (or 2#) and 7# (or 8#) removing and installing robots act; when the container is single 45-foot, the 1# (or 2#) and 7# (or 8#) removing and installing robots act; and when the container is double 20-foot, the 1# (or 2#), 3# (or 4#), 5# (or 6#) and 7# (or 8#) removing and installing robots act.

Exemplarily, as shown in FIG. 6(b), the container fitting removing and installing system for the container further comprises a tilting mechanism 41 and a tray 44 for carrying the container fittings. The tilting mechanism 41 is used to drive the tray 44 to tilt so as to separate the container fittings from the tray 44.

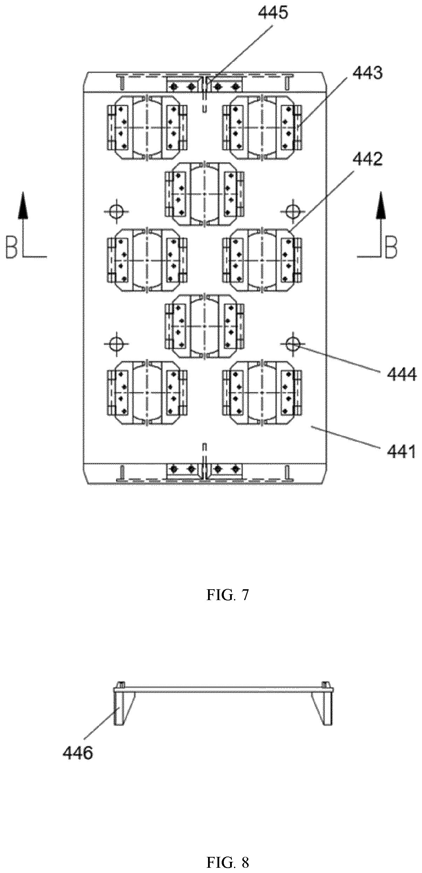

As shown in FIG. 7, the tray 44 comprises:
a tray rack 44, provided with a plurality of installing holes thereon; and
a plurality of carrying portions, respectively provided in the installing holes, wherein each of the carrying portions comprises two oppositely provided cover plates 442, and top ends of opposite sides of the two cover plates 442 are respectively hinged to top ends of the opposite side walls of the installing hole; when the cover plates 442 are in a closed state, an accommodation space for carrying the container fittings is formed between the opposite sides of the two cover plates 442; the bottom end of the side wall of the installing hole has a protrusion extending towards the axis of the installing hole, the protrusion is used to restrict the cover plate 442 from opening in one direction. Specifically, the cover plate 442 is connected to the tray rack 441 by using a spring hinge 443.

Optionally, at least two rows of carrying portions are provided on the tray rack 441, and each adjacent two rows of carrying mechanisms in the at least two rows of carrying portions are staggered along the first direction.

Optionally, as shown in FIGS. 7 and 8, a "mortise-tenon-like" structure can further be provided on the tray rack 441. Specifically, a mortise 445 can be provided on an upper end surface of the tray rack, a tenon 446 can be provided on a lower end surface of the tray rack, and this is convenient for stacking of the trays 44. In addition, multiple lifting points 444 can be provided on the tray rack 441 to facilitate the lifting of the tray 44 by a spreader.

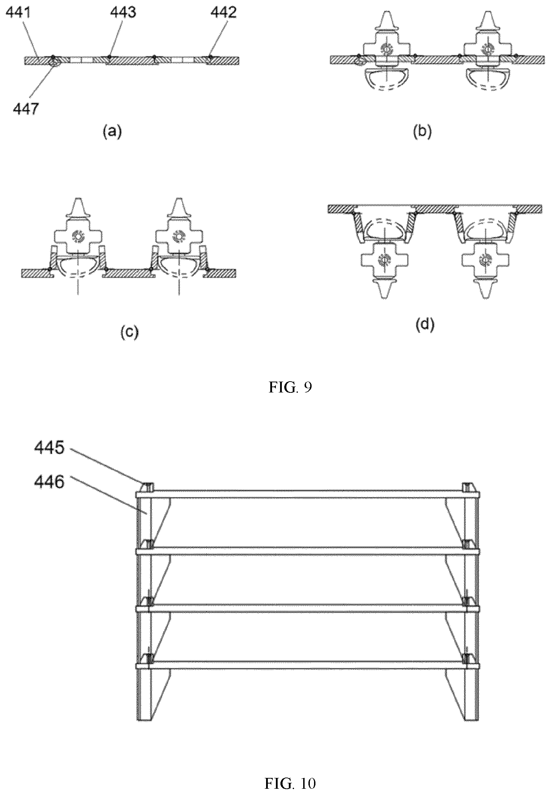

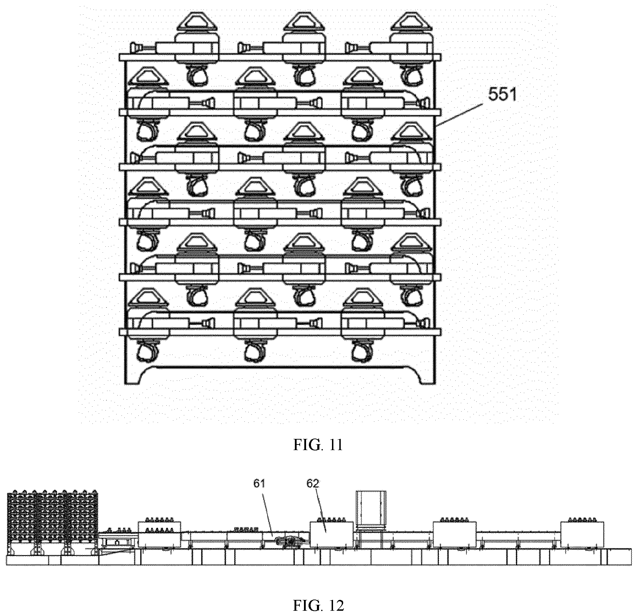

Specifically, the tray 44 can facilitate the placement of the container fittings and the storage of the container fittings in the future, hence achieving a regular and orderly arrangement of the container fittings. Taking FIGS. 7 to 9 as an example, eight container fittings can be placed on one tray 44, and the tray 44 is designed to place all types and brands of container fittings available in the market. The tray 44 is composed of a tray rack 441, a tenon 446, a mortise 445, a spring hinge 443, and a cover plate 442, and lifting points 444 are provided on the tray 44. The cover plate 442 is installed on the tray rack 441 by using the spring hinge 443, and the tray rack 441 slightly protrudes from the cover plate 442. In order to cooperate with the automation of ship unloading process, the cover plate 442 is designed as one-way opening cover. At the same time, in order to facilitate palletising and stacking, the tray 44 is designed as a " mortise-tenon-like" structure. As shown in FIG. 10, an upper tray can be automatically aligned when stacked on a lower tray. In order to increase the palletising storage capacity, the position of the lifting point of the tray 44 can further be designed to be centrosymmetric. When the tray 44 is placed, the container fittings can be alternately placed in opposite directions (as shown in FIG. 11, one layer of container fittings face toward the left and one layer of container fittings face toward the right) to save space and improve space utilization.

In specific implementation, when the container fittings are removed, the tray 44 is placed in the forward direction of the conveying line. At this time, the state of the tray is shown in FIG. 9(a). The removing and installing robot can place the container fittings on the tray 44, as shown in FIG. 9(b). When the container fittings are installed, the removing and installing robot can remove the container fittings from the tray 44 (shown in FIG. 9(c)) and then the tray 44 is restored to the shape shown in FIG. 9(a) under the action of the spring hinge 443. When the ship is unloaded, the tray 44 is tilted by 180° at the loading and unloading area. Under the action of its own weight, the cover plate 442 automatically opens (as shown in FIG. 9(d)), and the container fittings automatically fall into the gearbins for collecting by gravity. The tray 44 is tilted by 180° again to return to the state shown in FIG. 9(a).

Exemplarily, the container fitting removing and installing system for the container further comprises a palletizing unit 5, and the palletizing unit 5 comprises:
a palletizing rack 551, for stacking the trays 44;
a palletizing robot, connected to the control unit to achieve the transfer of the trays 44 between the conveying unit and the palletizing rack, wherein the palletizing robot comprises a palletizing robotic arm connected to the control unit and a palletizing spreader installed at one end of the palletizing robotic arm, and the spreader is used to lift the tray 44.

Specifically, the palletizing rack mainly plays a safety protection role for the tray 44 to prevent the tray 44 from tilting over in unexpected situations. Usually, the positioning of the tray 44 relies on the "mortise-tenon-like" structure of the tray 44. In specific implementation, one palletizing rack can be placed with 10 layers of trays 44, and a total of 6 palletizing racks are provided in the palletizing area, and a maximum of 480 container fittings can be stored. The removed container fittings can be stored on the palletizing rack by using the tray 44. When there is a need to install the container fittings, the palletizing robot can return the tray 44 from the palletizing rack to the conveyor belt and send the tray 44 to the vicinity of the removing and installing robot without the need to feed the container fittings on the tray 44, thereby improving efficiency.

Specifically, the 9# robot in FIG. 6(a) is a palletizing robot. Furthermore, the 9# robot is responsible for grabbing and stacking the trays 44. Specifically, the working area of the 9# palletizing robot can cover the end positions of the two conveying lines, six palletizing positions, and three loading and unloading positions mentioned below. The three loading and unloading positions refer to the docking of the palletizing robot and the loading and unloading unit 4 when the ship is unloaded. The trays of the loading and unloading unit 4 are left and right sides, and the robot deals with the trays at these two positions. During ship loading, the loading and unloading trays are front and back sides, and the robot deals with the trays at the inner position, while the outer position is handled by man to feed the container fittings, no robot is needed.

Exemplarily, the container fitting removing and installing system for the container further comprises a conveying unit 6 used to transport the trays 44 between the removing and installing unit 3 and the tilting mechanism 41.

Exemplarily, as shown in FIG. 12, the conveying unit 6 comprises a plurality of conveying mechanisms 61 and a jacking mechanism 62. The jacking mechanism 62 is provided between two adjacent conveying mechanisms 61, and the jacking mechanism 62 is provided close to the removing and installing unit.

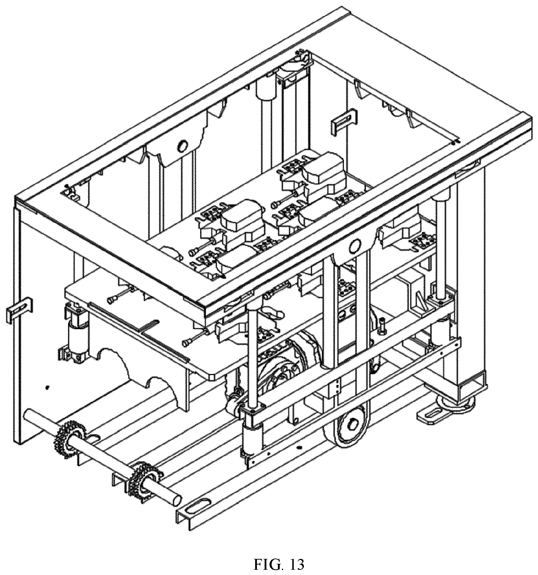

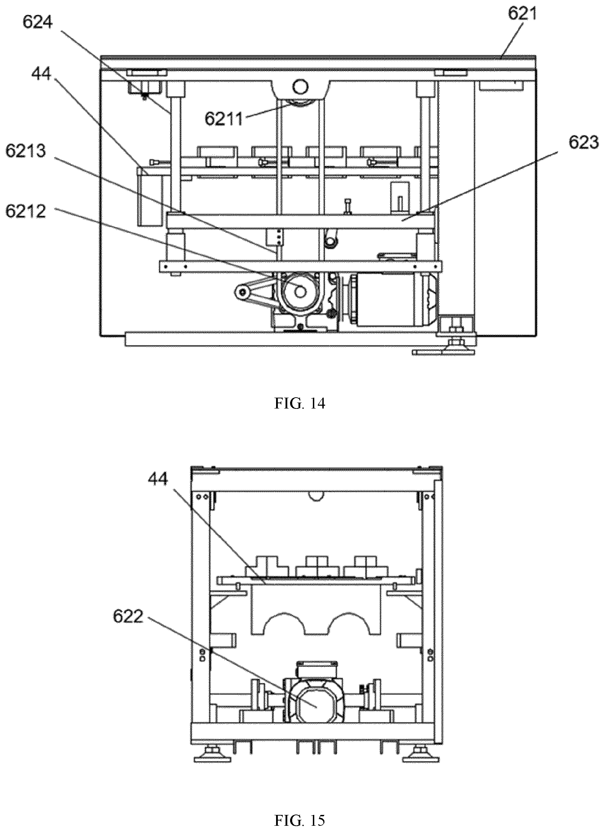

Specifically, as shown in FIGS. 13 to 15, the jacking mechanism 62 comprises:
an outer frame 621, the fifth sprocket 6211 being fixed at the upper end of the outer frame 621;
a jacking motor 622, provided at the bottom of the outer frame 621, the output end of the jacking motor 622 being connected to the sixth sprocket 6212, the fifth sprocket 621 and the sixth sprocket 6212 being connected through a third chain 6213;
a support rack 623, used to place the trays 44, the support rack 623 being connected to the third chain 6213, and the support rack 623 moving in a vertical direction by operation of the third chain 6213 when the jacking motor 622 drives the sixth sprocket 6212 to drive the third chain 6213 to operate.

Optionally, an upper end of the outer frame 621 is further provided with a guide rod 624 extending in the vertical direction, the guide rod 624 passes through the support frame 623, and the support frame 623 can move up and down along the guide rod 624 in the vertical direction.

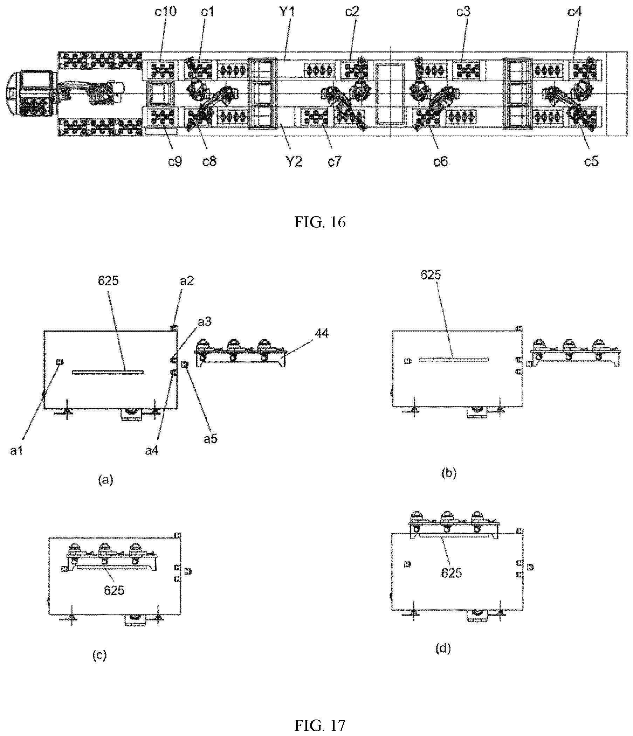

Specifically, as shown in FIG. 16, there are ten workstations provided with tray 44 on the entire conveying system, workstations c9 and c10 are at the end and coordinate with the palletizing unit 5 to carry out the replacement of the trays 44, and c1~c8 workstations coordinate with the removing and installing unit 3. The trays 44 on the c1 workstation, c2 workstation, c3 workstation, c4 workstation and c10 workstation are on a conveying line Y1. The trays 44 on the c5 workstation, c6 workstation, c7 workstation, c8 workstation and c9 workstation are on a conveying line Y2.

Exemplarily, the conveying unit 6 is provided with a total of two conveying lines, that is, the first conveying line Y1 and the second conveying line Y2, and the two conveying lines can operate continuously at the same time. When conveying, the tray 44 is placed on the conveying line, and the tray 44 is replaced with the coordination of the jacking mechanism 62 as needed; and the design of having two conveying lines can ensure the continuous operation of the removing and installing unit. In the process of removing and installing the container fittings, the removing and installing robot preferentially places the trays 44 on one side of the conveying line or grabs the container fittings. When the tray 44 is full of container fittings or all of the container fittings are grabbed and used, the system replaces the trays 44 on the other side of the conveying line. At the same time, the removing and installing robot switches to the other side of the conveying line to perform continuous operation.

As shown in FIG. 12, four jacking mechanisms 62 are provided on one conveying line. When jacked up, the tray 44 is jacked up to a jacking height, and the tray 44 is fixed, so as to facilitate interaction with the robot. That is, the robot can grab the container fittings from the tray 44 or place the container fittings on the tray 44. When the tray 44 is lowered, the tray 44 falls on the conveying line to transfer the tray 44.

Exemplarily, the jacking mechanism 62 can further be provided with five sensors, that is, a first detecting sensor a1 to a fifth detecting sensor a5. The first detecting sensor a1 and the fifth detecting sensor a5 are arranged in the horizontal direction, and the second detecting sensor a2, the third detecting sensor a3, and the fourth detecting sensor a4 are arranged along the height direction (that is, the vertical direction). When the conveying line conveys from right to left, the jacking device bracket is in a position shown in FIG. 17(a), and the fourth detecting sensor a4 is used to detect whether the tray 44 of the jacking device is below the jacking conveying height. When the fifth detecting sensor a5 senses the tray 44, the bracket 625 of the jacking device slightly jacks up (as shown in FIG. 17(b)), and the third detecting sensor a3 detects whether the bracket 625 of the jacking device has slightly jacks up and in position. When the first detecting sensor a1 detects that the tray 44 is conveyed to a jacking position, the jacking device starts to jack up (as shown in FIG. 17(c)). In addition, except for the detection by the first detecting sensor a1, the bracket 625 of the jacking device slightly jacks up to stop the tray 44 from continuing to move forward after the tray 44 is in position, and finally achieves a mechanical stop for accurate positioning. The second detecting sensor a2 is used to detect whether the jacking device has jacks up to the highest point, and then stops jacking up (as shown in FIG. 17(d)).

Exemplarily, the tilting mechanism 41 comprises a tilting motor 411 and a supporting frame 412 connected to an output end of the tilting motor 411, the supporting frame 412 is used to carry the tray 44, and the tilting motor 411 is connected to the control unit.

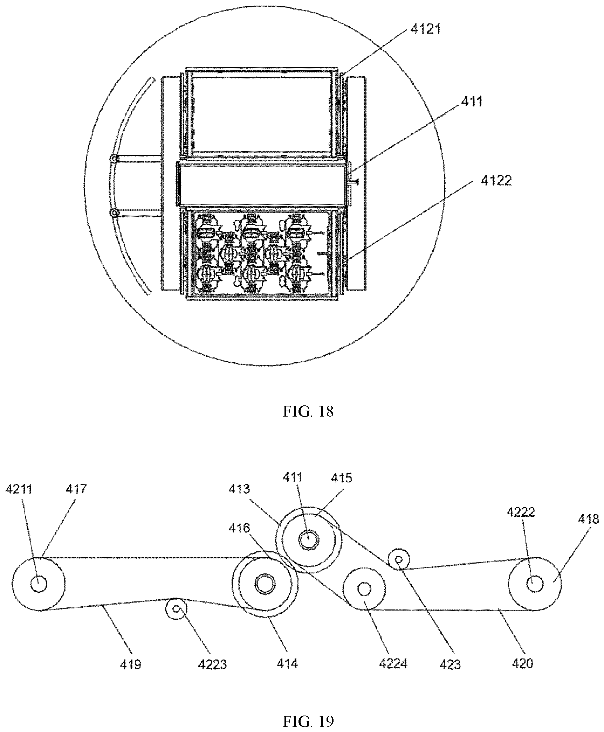

Exemplarily, as shown in FIG. 18, the supporting frame 412 comprises a first supporting frame 4121 and a second supporting frame 4122. The first supporting frame 4121 and the second supporting frame 4122 are provided at intervals on both sides of the tilting motor 411. Specifically, as shown in FIG. 19, the tilting mechanism 41 further comprises:
a first gear 413, sleeved on an output end of the tilting motor 411 which drives the first gear 413 to rotate synchronously;
a first sprocket 415, coaxially connected to the first gear 413;
a second gear 414, meshed to the first gear 413;
a second sprocket 416, coaxially connected to the second gear 414;
a third sprocket 417, connected to the second sprocket 416 through a first chain 419;
a first rotating shaft 4211, provided in the first supporting frame 4121, the first rotating shaft 4211 being connected to the third sprocket 417 to drive the first supporting frame 4121 to tilt over under the driving of the third sprocket 417;
a fourth sprocket 418, connected to the first sprocket 415 through the second chain 420;
a second rotating shaft 4222, provided in the second supporting frame 4122, the second rotating shaft 4222 being connected to the fourth sprocket 418 to drive the second supporting frame 4122 to tilt over under the driving of the fourth sprocket 418.

That is, the tilting mechanism 41 is composed of the tilting motor 411, the gear, the sprocket, the chain and etc. The first gear 413 and the first sprocket 415 are installed coaxially, and the first gear 413 is installed on the inner side. The second gear 414 and the second sprocket 416 are coaxially installed, and the second gear 414 is installed on the inner side. The tilting motor 411 drives the first gear 413 and the first sprocket 415, and the first sprocket 415 drives the fourth sprocket 418 through chain driving, so as to achieve the tilting of the tray 44 on one side. The first gear 413 drives the second gear 414 and the second sprocket 416, and the second sprocket 416 drives the third sprocket 417 through chain driving, so as to achieve the tilting of the tray 44 on the other side. Furthermore, outer sides of the first chain and the second chain are respectively provided with a belt tension wheel 4223, and an inner side of the second chain is provided with a guide wheel 4224.

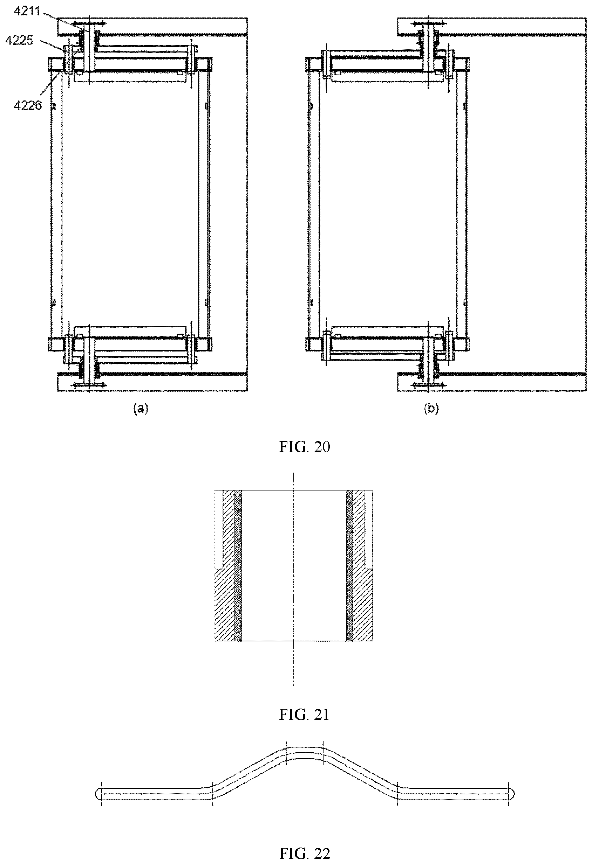

In a ship unloading process, the tilting mechanism 41 tilts the tray 44 by 180 degrees, and the container fittings automatically fall into the gearbins provided below under the action of its own weight to achieve unmanned automatic removal. The supporting frame at the end of the platform can accommodate two trays 44 at the same time. As shown in FIG. 20, the supporting frame adopts a cam-like design. During the tilting of the supporting frame from 0 degrees to 180 degrees, four pins are extended to fix the tray 44 and to prevent it from falling into the gearbins. As shown in FIG. 20, taking the first supporting frame as an example, when the third sprocket 417 drives the first shaft 4211 to rotate, the pin 4225 moves forward and backward with a cylindrical cam 4226 with milling grooves, to achieve that the tray 44 is fixed in position as it rotates 180 degrees, as shown in FIG. 20(b). FIG. 20(a) shows the supporting frame diagram in the neutral state. The structure of a cylindrical cam 4226 with milling grooves is shown in FIG. 21 and FIG. 22.

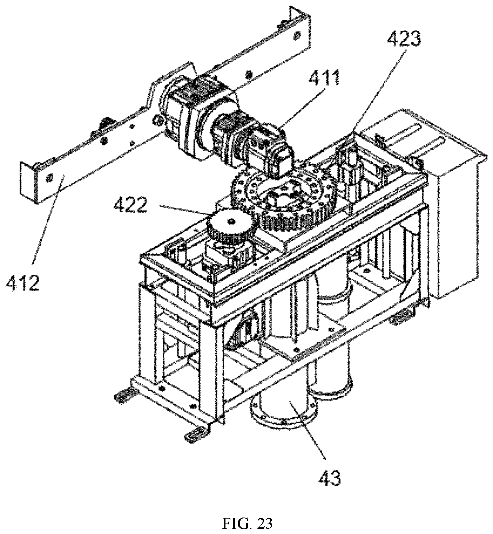

Exemplarily, the container fitting removing and installing system for the container further comprises a slewing mechanism 42. As shown in FIG. 23 and FIG. 24, the slewing mechanism 42 comprises:
a slewing motor 421, connected to the control unit 1;
a third gear 422, connected to an output end of the slewing motor 421;
a fourth gear 423, respectively connected to the third gear 422 and the tilting mechanism 41; wherein the tilting mechanism 41 is provided above the fourth gear 423; and
the slewing motor 421 is used to drive the third gear 422 and the fourth gear 423 to operate under the control of the control unit 1, so as to drive the tilting mechanism 41 to rotate in a horizontal plane.

Specifically, the fourth gear 423 is a large gear, and the third gear 422 is a small gear. As shown in FIG. 23, the tray 44 and the tilting mechanism 41 are installed on the large gear of the slewing mechanism 42 as a whole. The small gear is driven by the motor, and the small gear meshes with the large gear for transmission, to achieve the slewing of the upper overall mechanism.

Under normal circumstances during operations, arrangements are firstly made according to the loading and unloading plan of the terminal, and the location for worker to place the container fittings is at a centralized and comfortable working area. The tray 44 of placed container fittings is then placed into a palletizing storage area before operation starts. However, the setting of the slewing mechanism 42 can facilitate the extreme situation when the quantity of container fittings stored in the ship unloading process is not sufficient for using in the ship loading process and the container fittings need to be placed manually. In specific implementation, the tray 44 can be horizontally rotated 90 degrees, and the worker for placing the container fittings can stand at the end of the device and retrieve the container fittings from the gearbins and place them onto the tray 44. When the tray 44 is full, the tray 44 is turned by 180° to exchange the positions of the two trays 44. The tray 44 full of the container fittings is turned to the inner side, and the palletizing system can transport the tray 44 to the designated position. At the same time, the empty tray 44 is turned to the outer side, so that the worker can continue to place the container fittings. This alternating cycle ensures the normal continuous operation of device loading through the continuous manual container fitting placing.

Exemplarily, the container fitting removing and installing system for the container further comprises a lifting and lowering mechanism 43 which is connected to the slewing mechanism 42 and used to drive the slewing mechanism 42 and the tilting mechanism 41 connected to the slewing mechanism 42 to move in the vertical direction.

Specifically, as shown in FIGS. 23 and 24, the tray 44, the slewing mechanism 42 and the tilting mechanism 41 can be installed on the lifting and lowering mechanism 43 as a whole, and the lifting and lowering mechanism 43 can achieve the lifting and lowering of the height by using a hydraulic cylinder. The 0# position is the lowest height which can place majority of the gearbins available in the market and is ergonomic (that is, people feel comfortable in hand and at a comfortable height when placing the container fittings on the tray 44). The main purposes of lifting and lowering are as follows: on one hand, the height is adjusted to adapt to the heights of the gearbins below; on the other hand, after the gearbins are full of container fittings, the gearbins need to be replaced, the lifting can give way to sufficient space, and it is convenient for forklift operation.

Specifically, the lifting and lowering mechanism 43, the slewing mechanism 42 and the tilting mechanism 41 together constitute a loading and unloading unit 4. Generally speaking, the quantity of container fittings required to be removed for unloading containers at terminal is roughly the same as the quantity of container fittings required for loading the containers. Therefore, the container fitting removing and installing system for the container only needs to convey the container fittings stacked by the palletizing unit 5 in the designated area to the corresponding position by the conveying unit 6, and then the removing and installing unit is responsible for installing the container fittings on the container. However, under extreme conditions, if the quantity of container fittings removed is more than the quantity of container fittings required to be installed next time, the excess container fittings need to be collected, that is, the excess container fittings placed on the tray 44 are automatically unloaded by using the loading and unloading unit 4, so that this part of the container fittings fall into the gearbins; if the quantity of container fittings removed from the containers is less than the quantity of container fittings required to be installed, the corresponding quantity of container fittings needs to be supplemented, that is, the container fittings are manually placed on the tray 44 by using the loading and unloading unit 4 to meet the quantity of container fittings of the container required for installation.

Furthermore, the control unit 1 is responsible for control of the container fitting removing and installing system for the container and signal connection with other units of the system. Specifically, three traffic indicator lights are installed on the top and sides of the container fitting removing and installing work platform of the container respectively. Each traffic indicator light has four bulbs in four colours. The selection of the indicator lights needs to pay attention to the visibility under heavy rain and fog conditions. The light at the top of the platform is located at the end of the length direction, which can prevent the container stacked on the platform from obstructing the sight of the quay crane driver. The two lights at the sides are located above the center line of the two sides of the platform, which are used for communication of the status of the port stockman and the machine repairer. The lighting situation can visually inform the current states of the platform of the port operators. A signal light is provided at the end of the system. Red indicates that the container has landed completely on the platform and the removing and installing of the container fittings is in progress. In this case, the quay crane operator is not allowed to lift the container. Green indicates that the removing and installing of the container fittings has completed, and the quay crane operator can lift the container. Yellow indicates a maintenance mode or a system failure. White indicates that the loading and unloading worker can safely and manually place the container fittings on the tray 44 at the end of the system.

In addition, the container fitting removing and installing system for the container can be powered by a power source. Furthermore, in order to facilitate the operation of the container fitting removing and installing system under the quay crane, the system can also be powered with the power supplied by the quay crane or by a separate engine.

The container fitting removing and installing system for the container provided by the present invention can realize unmanned and fully automated container fitting removing and installing, and can realize the unmanned role of the terminal in the true sense, change the operation mode of the terminal, optimize the operation process, and improve efficiency of removing and installing of the container fittings of the terminal container.

The invention further discloses an operation method of the container fitting removing and installing system for the container, the operation method comprises the following steps:
Step A1: The control unit 1 receives an operation command;
Step A2: The control unit 1 controls operation of the palletizing unit 5 according to the operation command, so that the palletizing unit 5 places a tray full of the container fittings either at the designated area or at the tilting mechanism 41.
Step A3: When the palletizing unit 5 transports the tray full of the container fittings to the tilting mechanism 41, the control unit 1 controls the tilting mechanism 41 to tilt the tray with container fittings by 180°, so that the container fittings automatically fall into the gearbins under the action of gravity.
Step A4: The control unit 1 controls the palletizing unit 5 to place the transported empty trays at a designated position.
Step A5: Repeat the above two steps (that is, repeat steps A3 and A4) until removing of the container fittings is completed.

Exemplarily, the operation command comprises the quantity of container fittings to be removed and the quantity of container fittings to be installed; the control unit 1 controlling the operation of the palletizing unit according to the operation command to make the palletizing unit 5 place the tray full of container fittings either at the designated area or at the tilting mechanism 41 comprises steps of:
the control unit 1 comparing the quantity of container fittings to be removed with the quantity of container fittings to be installed based on the operation command, if the quantity of container fittings to be removed is equal to the quantity of container fittings to be installed, the control unit 1 controlling the palletizing unit 5 to place the trays in the designated area;
if the quantity of container fittings to be removed is more than the quantity of container fittings to be installed, the control unit 1 controlling the palletizing unit 5 to place the trays full of the same quantity of container fittings as the quantity of container fittings to be installed into the designated area, and to place the remaining trays into the tilting mechanism 41;
if the quantity of container fittings to be removed is less than the quantity of container fittings to be installed, the control unit 1 controlling the palletizing unit 5 to place the trays into the designated area and manually place on the empty trays a quantity of container fittings equal to the difference between the quantity of container fittings to be installed and the quantity of container fittings to be removed.

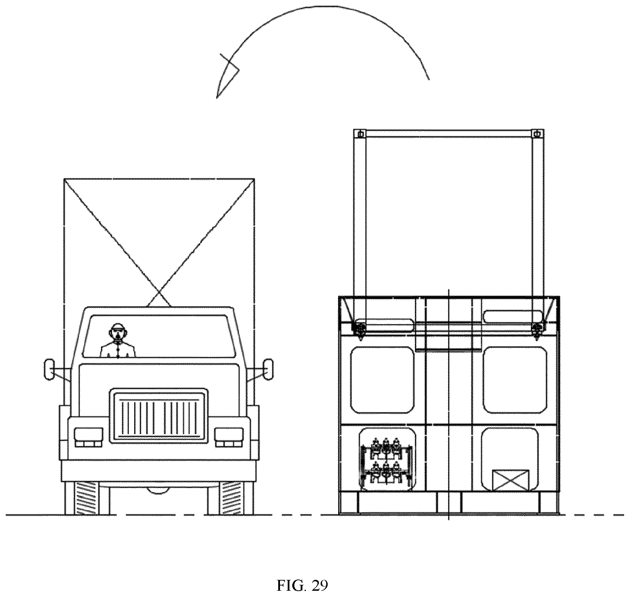

Below illustrates the example of the container fitting removing and installing system for the container carrying out the removal process of the container fittings in details
Step S1: As shown in FIG. 27, the entire container fitting removing and installing system is placed in a required fixed position and is powered on, and can be lifted by using a spreader with a steel wire rope, and is provided with 35' and 30' position lifting points for direct lifting.
Step S2: Before the operation, a relevant command is input according to the loading and unloading plan of the terminal (the operation command mainly comprises the quantity D of container fittings to be removed during unloading and the quantity C of container fittings to be installed during loading), then a corresponding gripper is selected according to the type of container fitting, and worker select the unloading operation mode and input the position of the 45-foot-container container fitting (the 45-foot position by default). It should be noted that during this process, the system automatically calculates, if D>C, the container fittings where quantity is (D-C) are directly placed at the loading and unloading unit during the removing process, the container fittings automatically fall into the gearbins, only the quantity of container fittings that need to be used in the installation process (i.e., C) are placed in the palletizing area, and the system automatically selects the corresponding gripper.
Step S3: The system will be in standby mode, waiting for the arrival of the container.
Step S4: As shown in FIG. 28, during the unloading process, the quay container crane lifts the container onto the bracket of the system, and the signal indicator turns red to communicate to the quay crane driver to not lift the container again.
Step S5: Cycle timing starts, and the container identifying unit performs container type detection and location detection; the container fitting identifying unit 21 accurately detects a target container fitting and provides accurate position information; the removing and installing unit 3 finds the target position according to the signal sent by the control unit, and removes the target container fitting.
Step S6: As shown in FIG. 29, the container fitting identifying unit 21 performs a second confirmation on whether the container fitting is removed. After confirming that the container fitting is successfully removed, the signal indicator turns green and the container is now allowed to be transported by the truck, and the cycle timing ends.
Step S7: Waiting for the arrival of the next container, and during the waiting process, the robot places the removed container fitting into the tray 44 of a first conveying line Y1.
Step S8: Repeat the cycle of the ship unloading and container fitting removing.
Step S9: After four cycles, the trays 44 of the first conveying line Y1 is full of container fittings, and the system carry out the replacement of the trays 44. The removed container fittings are then stored onto trays 44 of the second conveying line Y2. The replacement of the trays needs to be completed before the trays 44 in the second conveying line Y2 is full of container fittings, that is, within four cycles.
Step S10: Continue to unload the ship, the container fittings that are cyclically removed by the removing and installing unit are placed on the trays 44 of the second conveying line Y2; the trays 44 of the first conveying line Y1 is replaced; that is, T=5, (where T represents a quantity of operations), during the process of the five-cycles, the jacking mechanism in the first conveying line Y1 lowers the trays 44 to the conveying position, and the trays 44 of the first conveying line Y1 are conveyed to the left as a whole.
Step S11: Continue to unload the ship, the container fittings that are cyclically removed by the removing and installing unit are placed on the trays 44 of the second conveying line Y2, and the palletizing robot places the trays 44 conveyed by the first conveying line Y1 to the c9 workstation on the rack of the trays 44.
Step S12: Continue to unload the ship, the container fittings that are cyclically removed by the removing and installing unit are place on trays 44 of the second conveying line Y2 until the four trays 44 of the first conveying line Y1 are all placed on the palletizing rack. In the process of the six-cycles, the palletizing robot unloads the trays 44 (four layers), and the trays pick-up process ends.
Step S13: Continue to unload the ship, the container fittings that are cyclically removed by the removing and installing unit are place on trays 44 of the second conveying line Y2. At the end of the six-cycles, the palletizing robot removes the empty tray (one layer) from the palletizing rack and places the empty tray on the workstation c9 of the first conveying line Y1, the tray refilling starts; at the same time, the trays of the first conveying line Y1 are conveyed to the right as a whole.
Step S14: Continue to unload the ship, the container fittings that are cyclically removed by the removing and installing unit are place on trays 44 of the second conveying line Y2. At the end of the seven-cycles, the palletizing robot has removed the four empty trays and placed them on the first conveying line Y1. At the same time, the trays 44 of the first conveying line Y1 are conveyed to the right as a whole.
Step S15: Continue to unload the ship, the container fittings that are cyclically removed by the removing and installing unit are place on trays 44 of the second conveying line Y2. At the end of the eight-cycles, the trays of the first conveying line Y1 are conveyed to the right as a whole and are lifted in the position, the replacement of the trays is completed. The trays 44 of the second conveying line Y2 is now full of container fittings and needs to be replaced, while the trays 44 of the first conveying line Y1 have completed replacement. The container fittings to be removed subsequently will be stored onto the trays 44 of the first conveying line Y1.

It should be noted that the palletizing system robot can store the trays 44 at the workstation c9 or the workstation c10 and place them into the palletizing storage area according to the requirements, or place the trays 44 at the loading and unloading unit for performing. Steps S11 and S12 are example of the process of storing the trays 44 in the palletizing storage area.

S16: Repeat step S5 to step S15 to ensure that the entire operation of the system continues.

In addition, for the trays 44 placed on the loading and unloading unit as described above, the loading and unloading unit can tilt the tray 44 by 180° by using the tilting mechanism 41, and the container fittings automatically falls into the gearbins under the action of gravity.

The above process of unloading the container (container from the ship to the terminal) reveals the working process for removing the container fittings of the present invention. From the above process, it can be seen that the entire removing process does not require any manual handling, thereby achieving unmanned and fully automated removal of the container fittings, optimizing the operation processes and enhancing the efficiency of the removal and installation of the container fittings of the container at terminal.

In addition, the process of installing the container fittings during container loading process (the container from the terminal to the ship) is opposite to the above described removing process, therefore details of this are not described herein again. It should be noted that under normal conditions, the container fittings pre-stored in the removing process are used in the installing process. In extreme cases, if the pre-stored container fittings are not enough, manual assistance will be required to top up the container fittings by retrieving the container fittings from the gearbins and are placing them onto the trays 44 at the loading and unloading unit.

Although the present invention has been illustrated and described by referring to certain preferred embodiments of the present invention, the person of ordinary skill in the art should understand that the above content is a further detailed description of the present invention with reference to specific embodiments and cannot be considered that the specific implementation of the present invention is only limited to these descriptions. The person skilled in the art can make various changes in form and details, including making some simple deductions or substitutions, without deviating from the spirit and scope of the present invention.

## Claims

1. A container fitting removing and installing system for a container, comprising:
a control unit;
an identifying unit connected to the control unit and configured to identify the type and position information of the container and the types and position information of the container fittings and transmit an identification result to the control unit; and
a removing and installing unit connected to the control unit which controls the removing and installing unit to remove the container fittings from the container or to install the container fittings onto the container according to the received identification result.

2. The container fitting removing and installing system for a container according to claim 1, further comprising a tilting mechanism and a tray configured to carry the container fittings, the tilting mechanism being configured to drive the tray to tilt to separate the container fittings from the tray; wherein
the tray comprises:
a tray rack provided with a plurality of installing holes thereon; and
a plurality of carrying portions respectively provided in the installing holes,
wherein each of the carrying portions comprises two oppositely provided cover plates, and top ends of the opposite sides of the two cover plates are respectively hinged to top ends of the opposite side walls of the installing hole; when the cover plates are in a closed state, an accommodation space for carrying the container fittings is formed between the opposite sides of the two cover plates; a bottom end of a side wall of the installing hole has a protrusion extending towards an axis of the installing hole, and the protrusion is configured to restrict the cover plate from opening in one direction; when the tray rack is tilted by 180°, the cover plates are automatically opened to make the container fittings automatically fall into gearbins.

3. The container fitting removing and installing system for a container according to claim 2, wherein the tilting mechanism comprises a tilting motor and a supporting frame connected to an output end of the tilting motor, and the supporting frame is configured to carry the tray, and the tilting motor is connected to the control unit.

4. The container fitting removing and installing system for a container according to claim 3, wherein the supporting frame comprises a first supporting frame and a second supporting frame provided at intervals on both sides of the tilting motor; and the tilting mechanism further comprises:
a first gear sleeved on the output end of the tilting motor which drives the first gear to rotate synchronously;
a second gear meshed to the first gear;
a first sprocket connected to the second gear through a first chain;
a first rotating shaft provided in the first supporting frame, the first rotating shaft being connected to the first sprocket to drive the first supporting frame to tilt under the driving of the first sprocket;
a second sprocket connected to the second gear through a second chain; and
a second rotating shaft provided in the second supporting frame, the second rotating shaft being connected to the second sprocket to drive the second supporting frame to tilt under the driving of the second sprocket.

5. The container fitting removing and installing system for a container according to claim 2, further comprising a slewing mechanism which comprises:
a slewing motor connected to the control unit;
a third gear connected to an output end of the slewing motor;
a fourth gear respectively connected to the third gear and the tilting mechanism; the tilting mechanism being provided above the fourth gear;
the slewing motor is configured to drive the third gear and the fourth gear to operate under the control of the control unit, so as to drive the tilting mechanism to rotate in a horizontal plane.

6. The container fitting removing and installing system for a container according to claim 5, further comprising:
a lifting and lowering mechanism connected to the slewing mechanism and configured to drive the slewing mechanism and the tilting mechanism which is connected to the slewing mechanism to move in a vertical direction.

7. The container fitting removing and installing system for a container according to claim 2, further comprising:
a conveying unit configured to convey the tray between the removing and installing unit and the tilting mechanism.

8. The container fitting removing and installing system for a container according to claim 7, wherein the conveying unit comprises a plurality of conveying mechanisms and jacking mechanisms, each jacking mechanism is provided between two adjacent conveying mechanisms and provided close to the removing and installing unit, and the jacking mechanism comprises:
an outer frame fixed with a fifth sprocket at an upper end thereof;
a jacking motor provided at the bottom of the outer frame, an output end of the jacking motor being connected to a sixth sprocket, the fifth sprocket and the sixth sprocket being connected by a third chain; and
a support rack configured to place the tray, the support rack being connected to the third chain and moving in a vertical direction by operation of the third chain when the jacking motor drives the sixth sprocket to drive the third chain to operate.

9. The container fitting removing and installing system for a container according to claim 8, wherein an upper end of the outer frame is further provided with a guide rod extending in a vertical direction, the guide rod passes through the support frame, and the support frame is capable of moving up and down along the guide rod.

10. The container fitting removing and installing system for a container according to claim 7, further comprising a palletizing unit which comprises:
a palletizing rack configured to stack the tray; and
a palletizing robot connected to the control unit and configured to achieve the transfer of the tray between the conveying unit and the palletizing rack, the palletizing robot comprising a palletizing robotic arm connected to the control unit and a palletizing spreader installed at one end of the palletizing robotic arm.

11. The container fitting removing and installing system for a container according to claim 10, wherein the tray rack is provided with a plurality of lifting points and provided with a mortise and a tenon matched with each other, wherein the lifting points and the mortise are provided on an upper surface of the tray rack, and the tenon is provided on a lower surface of the tray rack.

12. The container fitting removing and installing system for a container according to claim 1, wherein the identifying unit comprises:
a container identifying unit connected to the control unit and configured to identify the type and position information of the container and send an identification result to the control unit; and
a container fitting identifying unit connected to the control unit, the control unit being further configured to control the container fitting identifying unit to move to a suitable position according to the identification result of the container identifying unit, so that the container fitting identifying unit obtains the types and position information of the container fittings; the container fitting identifying unit being configured to transmit the identified types and position information of the container fittings to the control unit.

13. The container fitting removing and installing system for a container according to claim 12, wherein the container identifying unit comprises five sensors arranged on a pedestal bracket at intervals along a first direction, and the pedestal bracket is configured to carry the container; and wherein each sensor is connected to the control unit, and when the sensor detects an object, the sensor sends a signal to the control unit, and the control unit determines the type and position information of the container according to the signal output by each sensor.

14. The container fitting removing and installing system for a container according to claim 12, wherein the container fitting identifying unit stores template comparing images of multiple types of container fittings, and a method that the container fitting identifying unit obtains the types and position information of the container fittings comprises steps of:
laser scanning the container fittings to obtain images of preset surfaces of the container fittings;
analyzing each point in the images to obtain depth information corresponding to each point;
respectively comparing the depth information of each point on the obtained images with depth information of each corresponding point in each template comparing image to determine the types of the container fittings; and
comparing the template comparing images corresponding to the container fittings with the obtained images of the container fittings to obtain the position information of the container fittings.

15. The container fitting removing and installing system for a container according to claim 12, wherein a sun visor is provided near the container fitting identifying unit.

16. The container fitting removing and installing system for a container according to claim 1, wherein the removing and installing unit comprises a plurality of robotic arms and a floating device connected to the robotic arm, the floating device is installed with a gripper for gripping the container fittings, each robotic arm is equipped with an automatic quick gripper replacement device, and a gripper cabinet configured to accommodate different types of grippers is provided near each robotic arm.

17. An operation method for the container fitting removing and installing system for a container according to claim 10, comprising steps of:
the control unit receiving an operation command;
the control unit controlling the palletizing unit to operate according to the operation command to make the palletizing unit place a tray full of container fittings either at a designated area or at the tilting mechanism;
when the palletizing unit transports the tray full of the container fittings to the tilting mechanism, the control unit controlling the tilting mechanism to tilt the tray with container fittings by 180°, to make the container fittings automatically fall into the gearbins under the action of gravity;
the control unit controlling the palletizing unit to place the transported empty tray at a designated position;
repeating the above two steps until removing of the container fittings is completed.

18. The operation method according to claim 17, wherein the operation command comprises the quantity of container fittings to be removed and the quantity of container fittings to be installed; the control unit controlling the palletizing unit to operate according to the operation command to make the palletizing unit place a tray full of container fittings either at a designated area or at the tilting mechanism comprises steps of:
the control unit comparing the quantity of container fittings to be removed with the quantity of container fittings to be installed based on the operation command, and if the quantity of container fittings to be removed is equal to the quantity of container fittings to be installed, the control unit controlling the palletizing unit to place the tray in the designated area;
if the quantity of container fittings to be removed is more than the quantity of container fittings to be installed, the control unit controlling the palletizing unit to place the tray full of the same quantity of container fittings as the quantity of container fittings to be installed into the designated area, and to place the remaining trays into the tilting mechanism; and
if the quantity of container fittings to be removed is less than the quantity of container fittings to be installed, the control unit controlling the palletizing unit to place the trays into the designated area and manually place on empty trays a quantity of container fittings equal to the difference between the quantity of container fittings to be installed and the quantity of container fittings to be removed.
